# EUROPEAN PATENT SPECIFICATION

(11) **EP 2 998 139 B1**
(45) Date of publication and mention of the grant of the patent: **05.09.2018**
(21) Application number: 13884512.8
(22) Date of filing: 17.05.2013
(51) Int. Cl.: B60H 1/34, B60H 1/00, B60S 1/54, B60S 1/02

(54) **AIR DISCHARGE DEVICE**
LUFTAUSTRITTSVORRICHTUNG
DISPOSITIF D'ÉVACUATION D'AIR

(43) Date of publication of application: 23.03.2016
(73) Proprietor: Howa Plastics Co., Ltd., Aichi 470-0496 (JP)
(72) Inventor: OOE Hiroyuki, Toyota-shi Aichi 470-0496 (JP)
(74) Representative: Ettmayr, Andreas
(86) International application number: PCT/JP2013/063830
(87) International publication number: WO 2014/184958

(56) References cited:
- EP-A1- 0 842 058
- EP-A2- 2 426 427
- GB-A- 2 240 856
- JP-A- S4 922 751
- JP-A- H10 175 430
- JP-A- 2007 263 468
- JP-A- 2008 032 261
- JP-A- 2010 019 483
- JP-A- 2010 019 483
- JP-U- S61 142 663
- JP-U- S61 152 514
- US-A1- 2009 050 404

## Description

### Technical Field

The present invention relates to an air blowing device including an air inlet, an airflow path for allowing air introduced from the air inlet to flow therethrough, and an air outlet for blowing out the air flowing through the airflow path.

### Background Art

Hitherto, various air blowing devices have been used to condition an environment in a cabin of an automobile or the like. For example, in an instrument panel for the automobile, there are provided an air blowing device (so-called "register") for supplying air used for cooling and heating to the automobile cabin, an air blowing device (so-called "defroster") for supplying air that is used to prevent or remove condensation on a windshield to the cabin, and the like.

For example, as an example of the defroster, one of related-art air blowing devices (hereinafter also referred to as "related-art device") includes an elongated blow-out port (air outlet) extending along the windshield and a nozzle (airflow path) for sending air toward the blow-out port. The nozzle of the related-art device has such a shape that a sectional area of a flow path gradually increases as approaching to the blow-out port (in brief, a fan-like shape). With such a shape, it is considered that the related-art device attempts to gradually disperse and diffuse the air passing through the nozzle so as to uniformly blow out the air from the entire blow-out port (see, for example, JP 2010-188791 A). JP 2010-019483 A discloses a helical ribbon structure (rectifier) for directing an air flow inside a cylindrical filter. JP S61-152514 U discloses an exhaust air duct with a helical flow path wherein the largest part of air introduced from an air inlet is discharged in an axial direction, and only small amounts thereof are discharged through radial drain holes. JP S49-22751 A, which shows all the features of the preamble of claim 1, discloses an air blowing device comprising an air inlet, a helical flow path with an opening leading to a discharge path wherein all the air introduced from the air inlet passes through the opening and the discharge path.

### Summary of Invention

### Technical Problem

In recent years, in view of downsizing of the instrument panel itself for the automobile, improvement of appearance of the periphery of the instrument panel, and the like, an area of a region, in which the air blowing devices (such as the register and the defroster) can be installed, tends to decrease. Along with this tendency, the air blowing device is desired to be downsized as much as possible without impairing functions of the air blowing device.

As an example of the functions of the air blowing device, the defroster is generally required to blow out an airflow as uniform as possible (for example, with a small variation in flow velocity, flow rate, and the like) at sufficient flow velocity and flow rate toward a planar windshield having a large area. Therefore, it is considered that the defroster of the related-art device includes a structure (fan-like nozzle) for dispersing and diffusing the airflow, which is arranged behind the air outlet (blow-out port), to make the airflow blown out from the air outlet uniform.

In general, however, it is considered to be difficult to downsize the structure for dispersing and diffusing the airflow over a wide range. For example, the fan-like nozzle in the related-art device is required to have, in principle, a nozzle length (flow path length from an inlet to an outlet of the nozzle) in accordance with a size of the air outlet so as to fully demonstrate the effects of dispersing and diffusing the air. Specifically, as the size of the air outlet becomes larger, a longer nozzle length is required. Conversely, if the nozzle length is reduced inattentively so as to downsize the air blowing device, it is considered that the air is not sufficiently dispersed and diffused inside the nozzle to result in partial airflow blown out from the air outlet.

On the other hand, it is conceivable to provide a plurality of guide plates (plate-like members for adjusting a flow direction of air) inside the nozzle to accelerate the dispersion and diffusion of the airflow by the guiding plates so as to reduce the nozzle length while maintaining the effects of dispersing and diffusing the airflow. In general, however, when the airflow is forcibly dispersed and diffused by an obstacle such as the guide plates, a pressure loss in the airflow path increases as the degree of dispersion and diffusion of the airflow is increased. A magnitude of the pressure loss is closely associated with the flow velocity and the flow rate of the air blown out from the air outlet or the like. Therefore, if the guide plates or the like are provided inattentively inside the nozzle in a number enough to sufficiently compensate for the reduction in nozzle length, it is considered that the pressure loss of the nozzle increases to prevent the airflow from being blown out at sufficient flow velocity and flow rate from the air outlet in some cases.

If the nozzle included in the related-art device is inattentively downsized, there is a risk of impairing the functions of the related-art device as the air blowing device. In other words, it is not easy to downsize the related-art device while maintaining the functions as the air blowing device.

In view of the above-mentioned problem, an object of the present invention is to provide an air blowing device capable of being downsized without impairing functions as the air blowing device.

For convenience, a degree of uniformity of characteristics (such as a flow velocity and a flow rate) of an airflow blown out from an air outlet of the air blowing device as a result of comparison of the characteristics at positions inside the air outlet is also referred to as "uniformity of the airflow". Specifically, high uniformity of the airflow means a small variation in characteristics of the airflow among those at the positions inside the air outlet, whereas low uniformity of the airflow means a large variation in characteristics of the airflow among those at the positions inside the air outlet.

### Solution to Problem

In order to solve the above-mentioned problems, according to the present invention, there is provided an air blowing device as defined in claim 1.

In this air blowing device:
the airflow path includes a helical flow path that is a helical airflow path extending as separating from the air inlet;
the helical flow path includes an opening formed in an outer circumferential surface of the helical flow path with a flow path sectional area of the helical flow path decreasing as separating from the air inlet;
the opening is connected to the air outlet through a discharge path configured to guide the air passing through the opening to the air outlet; and
the discharge path is formed to extend from the opening in a forward direction of a turning direction of the air flowing in the helical flow path.

According to the above-mentioned configuration, when the air introduced from the air inlet into the air blowing device moves in the airflow path (helical flow path thereof) toward the air outlet, the air flows while turning along a shape of the helical flow path (specifically, forms a helical swirl flow). After passing through the opening of the helical flow path (after flowing outside from inside of the helical flow path), the swirl flow is blown out from the air outlet through the discharge path extending from the opening in the forward direction of the turning direction of the swirl flow.

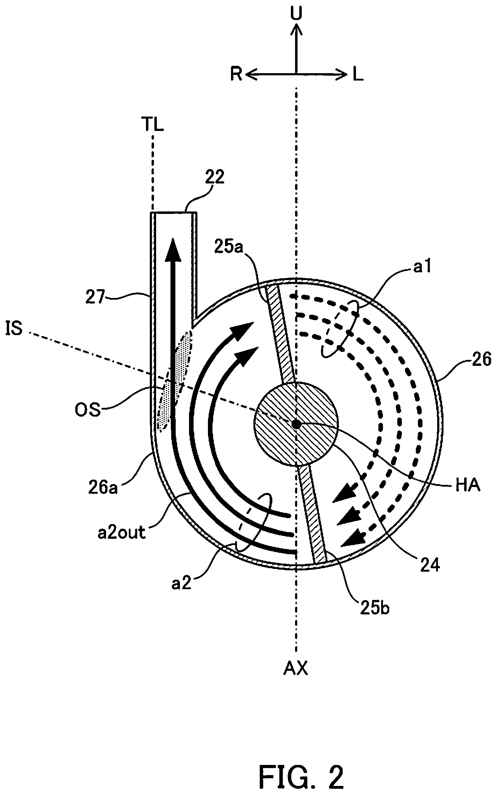

First, a relationship between the air introduced into the air blowing device and the air flowing out of the opening is described. The opening is formed in the outer circumferential surface of the helical flow path, and in the air flowing in the helical flow path (swirl flow), air flowing in the vicinity of the outer circumferential surface (in other words, air flowing in the helical flow path toward the opening) normally flows out of the opening, whereas air flowing at a position relatively distant from the outer circumferential surface continues flowing in the helical flow path. Further, if another opening is present on the flow path of the air that continues flowing in the helical flow path, a part of the air flows out of the opening, whereas the remaining air continues flowing in the helical flow path, as in the case described above (see, for example, FIG. 2). In other words, when the openings are formed at a plurality of positions on the helical flow path, the air introduced into the air blowing device is sequentially distributed (in other words, dispersed and diffused) to the openings while flowing through the helical flow path.

Next, the pressure loss in the helical flow path along with the dispersion and diffusion of air described above is described. A larger pressure loss generally tends to be generated in the helical flow path for a complex structure of the flow path as compared with that in an airflow path (for example, a simple tubular airflow path) without a helical structure. Therefore, through employment of the helical flow path, the pressure loss in a passage (flow path) through which the air introduced from the air inlet reaches the opening of the helical flow path increases in some cases as compared with the pressure loss in the airflow path without the helical structure.

According to the opening and the discharge path of the present invention, the swirl flow in the helical flow path flows along the outer circumferential surface of the helical flow path while flowing out of the opening (formed in the outer circumferential surface of the helical flow path) to which the discharge path extending in the forward direction of the turning direction of the swirl flow is connected. A direction in which the discharge path extends affects how the direction of flow of air after passing through the opening changes with respect to the direction of flow of air before passing through the opening (specifically, the degree of change in direction of flow of air before and after the passage of the opening). For example, in a case where the discharge path extends in a direction opposite to the turning direction of the swirl flow, the direction of flow of air changes to the opposite direction before and after the passage of the opening. Specifically, in this case, the degree of change in direction of flow of air before and after the passage of the opening is large.

On the other hand, the discharge path of the present invention extends in the forward direction of the turning direction of the swirl flow, and hence can allow at least a part of the swirl flow (air flowing toward the opening) to pass through the opening while maintaining the flow direction. Specifically, the degree of change in direction of flow of air before and after the passage of the opening is small. Therefore, the helical flow path of the present invention can efficiently use energy (for example, kinetic energy) generated by the flow of air (swirl flow) in the flow path to blow out the air. From another point of view, according to the configuration described above, by efficiently extracting an airflow (helical flow flowing along the outer circumferential surface) specific to the helical flow path from the opening, a loss of the energy, which is caused during the passage through the opening, can be reduced. For a reduced loss of the energy, the pressure loss caused during the passage through the opening is correspondingly reduced.

Therefore, even if the structure of the helical flow path affects the pressure loss in the flow path (increases the pressure loss) when the air is distributed (dispersed and diffused) to the opening through the helical flow path, the effect is mitigated (the amount of increase is partially or entirely cancelled out) by the structure of the opening and the discharge path. As a result, the pressure loss as the whole air blowing device is prevented from being excessively increased. In other words, the air blowing device of the present invention enables the air introduced from the air inlet to be distributed (dispersed and diffused) to the opening while suppressing the occurrence of the pressure loss.

Therefore, as compared with the air blowing device without the helical flow path, the air blowing device of the present invention can distribute (disperse and diffuse) the air to the opening in a more uniform state (for example, in a state where a variation in flow velocity and flow rate is small regardless of a distance between the air inlet and the opening). The thus distributed air is blown out from the air outlet. Specifically, the air blowing device of the present invention can blow out the airflow with high uniformity from the air outlet.

Therefore, if the arrangement of the opening and the air outlet and the like are adjusted based on a purpose of use of the air blowing device (for example, in a case where the air blowing device is used as the defroster, if the opening and the air outlet are arranged along a shape of the windshield), the airflow with high uniformity in accordance with the purpose of use is blown out from the air outlet. Therefore, the air blowing device of the present invention can blow out the air with high uniformity from the opening (air outlet) while appropriately dispersing and diffusing the air to the opening (air outlet) without using a structure such as the nozzle of the related-art device. Further, a structure that spreads in a fan-like pattern as in the case of the nozzle of the related-art device is not required.
Therefore, the air blowing device of the present invention can be designed much smaller in size.

Therefore, the air blowing device of the present invention can achieve both the maintenance of the functions as the air blowing device and the downsizing of the air blowing device. Specifically, the air blowing device of the present invention can be downsized without impairing the functions as the air blowing device.

The above-mentioned "air inlet, "airflow path", and "air outlet" only need to respectively have the characteristics described above, and specific number, shape, and arrangement thereof are not particularly limited. The number, shape, and arrangement of the air inlet, airflow path, and air outlet can be designed in view of, for example, functions required for the air blowing device (for example, such as a range of blow-out of the airflow and a direction of blow-out of the airflow).

The above-mentioned "helical flow path" only needs to be an airflow path having a helical shape (specifically, a flow path surrounded by a wall surface having a helical shape), and specific number, shape, and arrangement thereof are not particularly limited. For example, a length of the helical flow path in a helical axis direction (so called "helical pitch"; hereinafter also referred to as "unit turn length") when the helical flow path turns at 360 degrees about the helical axis, a diameter of the helix, a sectional shape (circular shape, ellipsoidal shape, or the like) when taken along a plane perpendicular to the helical axis, an area of the flow path on the cross section (flow path sectional area), and the number of overlapped helices (single helix, double helix, and the like) are not particularly limited. Further, a rate of the helical flow path to the whole airflow path is not particularly limited. The whole airflow path may be the helical flow path or a part of the airflow path may be the helical flow path. In addition, the helical axis of the helical flow path may be linear or curved. Each of parameters relating to the helical flow path can be set, for example, in consideration of the functions required for the air blowing device.

The expression "outer circumferential surface of the helical flow path" described above means a surface (outer surface) present on a radially outer side as viewed from the helical axis in a surface of a member forming a wall surface onto which the air flowing in the helical flow path is pressed by a centrifugal force generated along with the turning. The expression means, in different words, for example, the surface of the helical flow path, which is visible when the helical flow path is observed externally. Further, the expression means, in different words, for example, when the helical flow path is defined as "airflow path turning helically while being inscribed in a tubular virtual surface", an outer circumferential surface of the virtual surface. Further, the expression means, in different words, for example, when the helical flow path is replaced by "a tubular body (for example, a cylinder) having the same axis as the helical axis as a central axis, in which the helical flow path is inscribed", an outer circumferential surface of the tubular body. In addition, the expression means, in different words, a surface of the helical flow path that is the most distant from the helical axis of the helical flow path to a radially outer side of the helical flow path.

The above-mentioned "opening" only needs to be a through hole passing through the wall surface defining the helical flow path so that the air flowing in the helical flow path can be discharged outside of the helical flow path, and specific shape, number, arrangement, disposition, and the like are not particularly limited. In other words, the number, shape, arrangement, disposition, and the like of the opening can be set in consideration of the functions (such as the range of blow-out and the direction of blow-out) required for the air blowing device. Specific configuration examples of the opening are described later (Aspects 2 and 3).

The above-mentioned "discharge path" is an airflow path that connects the opening and the air outlet so as to allow the air flowing out of the opening to flow (be delivered) toward the air outlet, and specific number, shape, arrangement, and the like thereof are not particularly limited as long as the above-mentioned characteristic (extending from the opening in the forward direction of the turning direction of air flowing in the helical flow path) is provided. For example, the discharge path can be formed so as to extend from the opening in a tangential direction of the helical flow path. The expression "forward direction of the turning direction of air (swirl flow) flowing in the helical flow path" means, in different words, for example, a direction toward an arbitrary point in a region on a downstream side of the virtual plane when a virtual plane containing the axial line (helical axis) of the swirl flow and a center point of the opening is defined as a reference.

From another point of view, the expression "extending from the opening in the forward direction of the turning direction of air flowing in the helical flow path" described above for the discharge path means, in different words, for example, at least a part of the air flowing in the helical flow path toward the opening can pass through the opening while maintaining the flow direction. The expression means, in different words, the air flowing toward the opening can pass through the opening without flowing against the flow. Further, the expression means, in different words, for example, at least a part of the air flowing in the helical flow path (air contained in the swirl flow, which flows in the vicinity of the outer circumferential surface) can pass through the opening while maintaining the direction of flow.

The configuration and effects of the air blowing device of the present invention have been described above. Next, some examples (Aspects 1, 2, 5 and 6), useful for understanding the invention and some embodiments (Aspects 3 and 4) of the air blowing device according to the invention are described below.

### •Aspect 1 not being part of the invention

As described above, the shape of the above-mentioned "opening" or the like can be set in consideration of the functions required for the air blowing device. For example, when the air blowing device is used as the defroster, the air blowing device is generally required to blow out a sheet-like (thin plate-like) airflow as uniform as possible.

In view of this, when the air blowing device of the present aspect is used as the defroster,
the opening may be a single continuous opening extending along a helical axis of the helical flow path or a plurality of discontinuous openings arranged along the helical axis of the helical flow path.

According to the configuration described above, the air is discharged from the single opening or the plurality of openings arranged along the helical axis of the helical flow path (in brief, the opening(s) arranged linearly). If the air discharged in the thus linearly arranged state is guided to the air outlet having a predetermined shape (for example, an elongated slit-like air outlet conforming to the shape of the windshield or the like), the sheet-like (thin plate-like) airflow with high uniformity is blown out from the air outlet. Specifically, with the configuration described above, the air blowing device that can be used as the defroster is formed.

As understood from the description given above, the number of openings included in the air blowing device of this aspect is not particularly limited. A single continuous opening or a plurality of discontinuous openings may be used. The number of openings can be set, for example, in consideration of the flow rate of air to be blown out, the flow velocity of the air, and ease of manufacture of the air blowing device.

The air blowing device of the present aspect can blow out the airflow with high uniformity from the air outlet by including the helical flow path as described above. As a configuration for further increasing the uniformity of the airflow blown out from the air blowing device, the following specific examples (Aspects 2 to 5) are described. Values of various parameters in the following specific examples can be set in consideration of the result of experiment conducted in terms of enhancement of the uniformity of the airflow blown out from the air blowing device.

### •Aspect 2

For example, in the air blowing device of the present aspect, an opening area of the opening may increase as separating from the air inlet.

According to the configuration described above, the airflow is hard to be blown out from the opening (with a smaller opening area) close to the air inlet, whereas the airflow is easy to be blown out from the opening (with a larger opening area) distant from the air inlet. In this manner, the flow rate of air blown out from the opening distant from the air inlet can be increased while the flow rate of air blown out from the opening close to the air inlet is suppressed. Therefore, with the configuration described above, the air blowing device of this aspect can further enhance the uniformity of the airflow to be blown out without changing the shape of the air outlet or the like.

As a specific example, for example, when the opening is the "single continuous opening extending along the helical axis of the helical flow path" of the above-mentioned aspect (Aspect 1), the opening only needs to be formed so that a width of the opening in a circumferential direction of the opening (width in the circumferential direction of the opening about the helical axis) increases as separating from the air inlet. Further, for example, when the opening is the "plurality of discontinuous openings arranged along the helical axis of the helical flow path" of the aspect described above (Aspect 1), the openings only need to be formed so that a size of each of the openings (opening area) increases as separating from the air inlet.

•Aspect 3 as an embodiment of the invention according to appended claim 1 Further, in the air blowing device of the present invention, a flow path sectional area of the helical flow path decreases as separating from the air inlet.

In general, as the flow path sectional area of the airflow path becomes smaller, the flow velocity of air flowing in the airflow path increases. Therefore, according to the configuration described above, the flow velocity of air flowing toward the opening (with a smaller flow path sectional area of the helical flow path) distant from the air inlet is higher than the flow velocity of air flowing toward the opening (with a larger flow path sectional area of the helical flow path) close to the air inlet. In this manner, the flow velocity and flow rate of air blown out from the opening distant from the air inlet can be increased while the flow velocity and flow rate of air blown out from the opening close to the air inlet are suppressed. Therefore, the air blowing device of this aspect can further enhance the uniformity of the airflow to be blown out without changing the shape of the air outlet or the like.

The above-mentioned "flow path sectional area" means a sectional area of the airflow path (helical flow path) when the airflow path (helical flow path) is taken along a plane perpendicular to the helical axis. A specific structure for adjusting a magnitude of the flow path sectional area of the helical flow path is not particularly limited. An appropriate technique in consideration of ease of manufacture of the device and appearance of the device can be employed.

### •Aspect 4

For example, as an example of the structure for adjusting the flow path sectional area of the helical flow path, in the air blowing device of Aspect 3,
a size of a diameter of the outer circumferential surface of the helical flow path may be the same regardless of a distance from the air inlet, and
the air blowing device further may include a central shaft portion is arranged at a position corresponding to the helical axis of the helical flow path, and a size of a diameter of the central shaft portion may increase as separating from the air inlet.

According to the configuration described above, the flow path sectional area of the helical flow path (with a larger diameter of the central shaft portion) distant from the air inlet is smaller than the flow path sectional area of the helical flow path (with a smaller diameter of the central shaft portion) close to the air inlet. Specifically, the flow path sectional area of the helical flow path becomes smaller as separating from the air inlet.

### •Aspect 5

Further, for example, in the air blowing device of the present aspect, a unit turn length that is a length of the helical flow path in a helical axis direction when the helical flow path turns at 360 degrees about the helical axis may decrease as separating from the air inlet.

In general, as the unit turn length (helical pitch) of the helical flow path becomes smaller, the flow velocity of air flowing in the helical flow path increases. Therefore, according to the configuration described above, the flow velocity of air flowing toward the opening (with a smaller unit turn length of the helical flow path) distant from the air inlet is higher than the flow velocity of air flowing toward the opening (with a larger unit turn length of the helical flow path) close to the air inlet. In this manner, the flow velocity and flow rate of air blown out from the opening distant from the air inlet can be increased while the flow velocity and flow rate of air blown out from the opening close to the air inlet are suppressed. Therefore, the air blowing device of this aspect can further enhance the uniformity of the airflow to be blown out without changing the shape of the air outlet or the like.

The specific configuration examples (Aspects 2 to 5) for further enhancing the uniformity of the airflow blown out from the air blowing device have been described above.

### •Aspect 6

The air blowing device of the present aspect distributes, as described above, the air to the opening by using the structure of the helical flow path (helical structure). Therefore, if a multi-helical flow path is employed as the helical flow path, it is considered that the air can be more efficiently distributed to the opening owing to the increased number of flow paths.

In view of this, in the air blowing device of the present aspect, the helical flow path may be a multi-helical flow path formed by combining a plurality of helical airflow paths.

In general, as the number of helical airflow paths to be combined (the number of airflow paths forming the helical flow path) increases, it is considered that the pressure loss as the whole helical flow path increases. Therefore, the number of airflow paths forming the helical flow path may be set, for example, in consideration of the effect or the like of the increase in pressure loss on the functions required as the air blowing device (for example, the double-helical flow path and the like).

### Advantageous Effects of Invention

As described above, the air blowing device according to the present invention has the effect of enabling downsizing without impairing the functions as the air blowing device.

### Brief Description of Drawings

FIG. 1 is a schematic perspective view for illustrating an internal structure of an air blowing device according to a first example useful for understanding the invention.
FIG. 2 is a sectional view of the air blowing device when the air blowing device illustrated in FIG. 1 is taken along the line X-X.
FIG. 3 is a schematic view of the air blowing device illustrated in FIG. 1 as viewed from a forward direction (F) to a backward direction (B).
FIG. 4 is a schematic view of an air blowing device according to another example useful for understanding the invention.
FIG. 5 is a schematic view of an air blowing device according to another example useful for understanding the invention.
FIG. 6 is a schematic view of an air blowing device according to another example useful for understanding the invention.
FIG. 7 is a schematic view of an air blowing device according to an embodiment of the present invention.
FIG. 8 is a schematic view of an air blowing device according to another embodiment of the present invention.
FIG. 9 is a schematic view of an air blowing device according to another example useful for understanding the invention.

### Description of examples and embodiments

Now, an air blowing device according to some examples not being part of the invention and according to embodiments of the present invention are described referring to the drawings.

### <First Example>

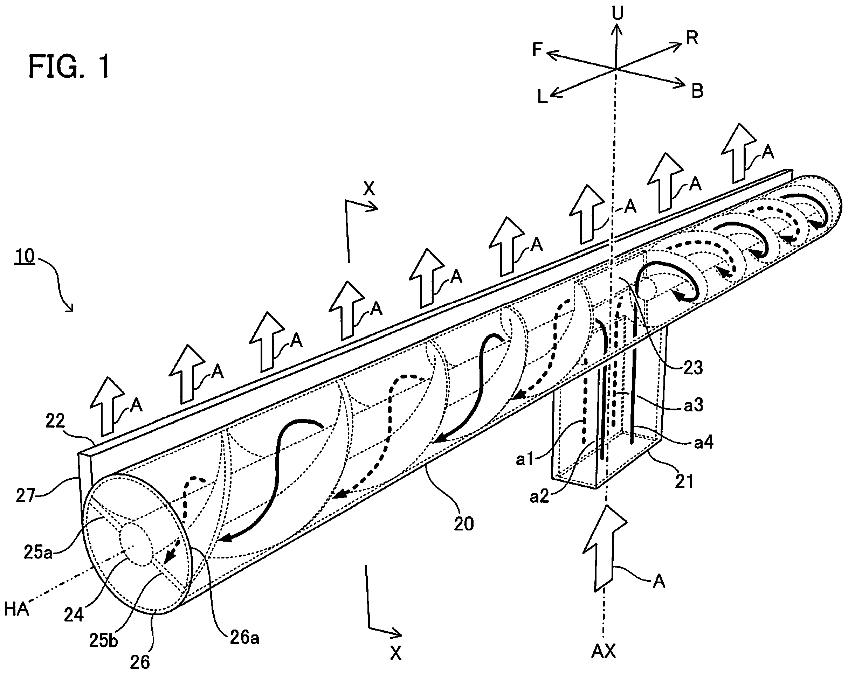

FIG. 1 is a schematic view for illustrating one example in which the air blowing device is applied to a defroster (hereinafter also referred to as "embodiment device"). An air blowing device 10 includes a case 20 that defines an air inlet, an airflow path, and an air outlet. A structure of the case 20 is described in further detail below.

FIG. 1 is a schematic perspective view of the air blowing device 10 for illustrating appearance and an internal structure of the air blowing device 10. As illustrated in FIG. 1, the case 20 included in the air blowing device 10 has a shape formed by coupling a portion having an approximately columnar shape and a portion having an approximately quadrangular prism shape as a whole. The internal structure of the case 20 is indicated by a dashed line in the drawing.

The case 20 blows out air flowing into an opening 21 (hereinafter also referred to as "air inlet 21") on a lower end side in the drawing from an opening 22 (hereinafter also referred to as "air outlet 22") on an upper end side. Specifically, the case 20 internally defines airflow paths through which an airflow A introduced from the air inlet 21 can pass (a rectangular tube flow path connecting the air inlet 21 and a central portion of the case 20 and helical airflow paths extending from the central portion of the case 20 in an outward direction) and blows out an airflow passing through the airflow paths as an airflow A blown out from the air outlet 22 in a predetermined direction.

The airflow paths defined by the case 20 are specifically described as follows. As illustrated in FIG. 1, a member that turns helically is arranged inside the case 20. With this member, four helical airflow paths (two double-helical flow paths) through which airflows a1, a2, a3, and a4 can pass are defined. Further, inside the case 20, a rectangular tube airflow path extending from the air inlet 21 to the central portion of the case 20 (flow path through which the airflows a1, a2, a3, and a4 pass before entering the helical flow paths) is also defined. In this manner, the airflow paths are formed so as to have the helical airflow paths (helical flow paths in a double-helical fashion) extending as separating from the air inlet 21 as a part of the airflow paths.

Now, the alternate long and short dash line AX in the drawing is also referred to as "central axis line AX of the case 20" for convenience. Further, a direction toward an upper side of the case 20 along the central axis line AX is also referred to as "upward direction (U)" for convenience. Directions toward a front side, a back side, left, and right of the case 20, which are orthogonal to the upward direction (U), are also referred to as "forward direction (F)", "backward direction (B)", "left direction (L)", and "right direction (R)". The upward, downward, forward, backward, left, and right directions are defined by regarding upward, downward, forward, backward, left, and right directions as references when the air blowing device 10 is viewed by an operator of an automobile in a case where the air blowing device 10 is mounted on an instrument panel of the automobile. In general, the defroster is stored inside the instrument panel, and therefore the case 20 is not actually visible to the operator.

The airflow A flowing from the air inlet 21 into the air blowing device 10 flows in the upward direction (U) along the central axis line AX of the case 20 to move toward the central portion of the case 20. Next, the airflow A is first split into a flow belonging to the forward direction (F) (the airflows a1 and a3 indicated by the dashed lines) and a flow belonging to the backward direction (B) (the airflows a2 and a4 indicated by the solid lines) by a manifold plate 23 arranged in the central portion of the case 20.

Further, the flow belonging to the forward direction (F) is split into the flow (airflow a1) directed toward the helical flow path in the left direction (L) and the flow (airflow a3) directed toward the helical flow path in the right direction (R). On the other hand, the flow belonging to the backward direction (B) is also split into the flow (airflow a2) directed toward the helical flow path in the left direction (L) and the flow (airflow a4) directed toward the helical flow path in the right direction (R).

As described above, the airflow A introduced into the air blowing device 10 is split into the four airflows a1, a2, a3, and a4 passing through the helical flow paths (having the double-helical shape) extending horizontally from the central portion of the case 20. The airflow A is a single airflow before being split into the four airflows a1, a2, a3, and a4 (for example, from the air inlet 21 to the central portion of the case 20). For convenience of description, the airflow A is illustrated in FIG. 1 as containing the four airflows a1, a2, a3, and a4 immediately after passing through the air inlet 21.

The helical flow path through which the airflows a1 and a2 flow (helical flow path in the left direction (L) from the central portion of the case 20) is formed by a central shaft portion 24 having a columnar shape, which is arranged at a position corresponding to a helical axis HA of the helical flow paths, helical walls 25a and 25b that are arranged so as to helically turn about the central shaft portion 24, and an outer wall portion 26 of the case 20 (in which the helical walls 25a and 25b are inscribed). Specifically, the helical flow path through which the airflows a1 and a2 flow is a helical hollow portion defined by the central shaft portion 24, the helical walls 25a and 25b, and the outer wall portion 26. The helical flow path is a double-helical flow path formed by combining two helical airflow paths. The airflow a1 (airflow indicated by the dashed line) and the airflow a2 (airflow indicated by the solid line) flow in the direction separating from the air inlet 21 (from the central portion of the case 20 in the left direction (L)) while turning alternately in the helical flow path.

Similarly, the helical flow path through which the airflows a3 and a4 flow (helical flow path in the right direction (R) from the central portion of the case 20) is also a hollow portion in a double-helical fashion defined by a central shaft portion, two helical walls, and the outer wall portion (the same as the outer wall portion 26 of the helical flow path in the left direction (L)). The airflow a3 (airflow indicated by the dashed line) and the airflow a4 (airflow indicated by the solid line) flow in the direction separating from the air inlet 21 (from the central portion of the case 20 in the right direction (R)) while turning alternately in the helical flow path.

The airflows a1, a2, a3, and a4 flowing in the airflow paths (helical flow paths) pass through an opening formed in an outer circumferential surface 26a of the outer wall portion 26 of the case 20 (described in detail later) to flow out of the helical flow paths to be blown out from the air outlet 22 through a discharge path 27. The airflow A blown out from the air outlet 22 is a sheet-like (thin plate-like) airflow. The airflow A is blown out to a windshield of an automobile to prevent or remove condensation on the windshield. As is understood from FIG. 1, the outer wall portion 26 of the case 20 can also be expressed as an outer wall portion of a "cylindrical body (approximate cylinder) having the same axis as the helical axis HA of the helical flow paths, in which the helical flow paths are inscribed". Therefore, in the following, the "outer circumferential surface 26a of the outer wall portion 26" is also referred to as "outer circumferential surface 26a of the helical flow path" for conveniences.

FIG. 2 is a schematic view for illustrating a cross section of the case 20 when the case 20 is taken along the X-X plane (plane containing the upward direction (U), the forward direction (F), and the backward direction (B)) in FIG. 1. As illustrated in FIG. 2, the airflow a1 and the airflow a2 flow in the helical flow path while turning about the helical axis HA. At this time, the airflows a1 and a2 flow in the helical flow path while being pressed against the outer wall portion 26 (in a direction from the helical axis HA toward the outer circumferential surface 26a of the helical flow path) by a centrifugal force generated along with the turning.

In the outer circumferential surface 26a of the helical flow path, an opening OS (through hole passing through the outer wall portion of the case 20) is formed. The opening OS is formed in the outer circumferential surface 26a of the helical flow path. Therefore, as illustrated in FIG. 2, an airflow a2out of the airflow a2 (swirl flow), which flows in the vicinity of the outer circumferential surface 26a (outer wall portion 26), passes through the opening OS to be discharged to the discharge path 27. On the other hand, an airflow (airflow except for a2out) of the airflow a2, which flows at a position distant from the outer circumferential surface 26a (outer wall portion), continues flowing in the helical flow path.

More specifically, the discharge path 27 is an airflow path connecting the opening OS and the air outlet 22, and guides the air discharged from the opening OS toward the air outlet 22. The discharge path 27 is formed so as to extend from the opening OS in a forward direction of a turning direction of air (swirl flow) flowing in the helical flow path. More specifically, the discharge path 27 is formed so as to extend from the opening OS in a tangential direction TL of the helical flow path (tangential direction of the outer circumferential surface 26a; starting from an end of the opening OS). Therefore, the airflow a2out flowing in the vicinity of the outer circumferential surface 26a of the helical flow path is discharged from the opening OS while maintaining the flow direction.

As illustrated in FIG. 2, the forward direction of the turning direction of the swirl flow means a "direction toward an arbitrary point in a region on a downstream side (upward direction (U) in the drawing) of a virtual plane IS with the virtual plane IS containing the helical axis HA and a central point of the opening OS being a reference".

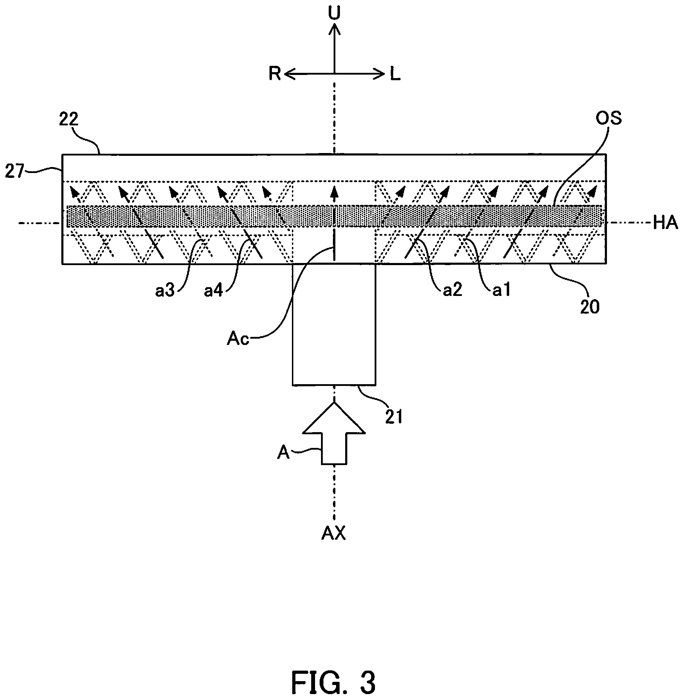

FIG. 3 is a schematic view of the case 20 when the case 20 is viewed from the forward direction (F) to the backward direction (B) in FIG. 1. As illustrated FIG. 3, the opening OS is formed in the outer circumferential surface 26a of the helical flow path as a single continuous opening extending along the helical axis HA of the helical flow path. Therefore, the airflows (a1, a2, a3, and a4) flowing in the helical flow paths while turning are discharged from the opening OS each time the airflows pass through the opening OS (see FIG. 2) to be sequentially distributed (dispersed and diffused) to positions in the opening OS.

As illustrated in FIG. 3, a partial airflow Ac (airflow in the vicinity of the center of the airflow A) of the airflow A introduced from the air inlet 21 passes through the central portion of the case 20 (periphery of the central axis line AX) to be discharged from the opening OS without flowing into the helical flow path. In order to prevent the airflow Ac described above from becoming excessively large (in other words, in order to prevent the airflow toward the helical flow path from becoming excessively small), a structure for suppressing the flow of air toward the opening OS (for example, a structure for reducing the flow path sectional area of the airflow Ac directed toward the opening OS; not shown) is provided in the central portion of the case 20.

The air blowing device 10 can be formed by, for example, injection molding of the case 20 having the structure described above by a known technique. Specifically, for example, a technique of injection-molding the whole case 20 at a time, a technique of individually injection-molding a plurality of parts obtained by dividing the case 20 and then coupling the parts, and the like are employed.

As described above, the airflow path of the air blowing device 10 includes the helical flow paths extending horizontally from the central portion of the case 20 (airflow paths through which the airflows a1, a2, a3, and a4 respectively pass). The opening OS is formed in the outer circumferential surface 26a of the helical flow paths, and the airflows a1, a2, a3, and a4 flowing in the helical flow paths are discharged from the opening OS. In this case, the discharge path 27 extends from the opening OS in the forward direction of the turning direction of the swirl flow in the helical flow paths. Then, the part a2out of the airflow (airflow flowing in the vicinity of the outer circumferential surface 26a) flowing toward the opening OS passes through the opening OS while maintaining the flow direction and is guided to the air outlet 22.

In this manner, the air blowing device 10 can blow out the airflow with higher uniformity from the entire air outlet 22 while being downsized as compared with the related-art device without impairing the functions as the defroster.

The air blowing device 10 according to the first example has been described above.

### <Other Examples and Embodiments>

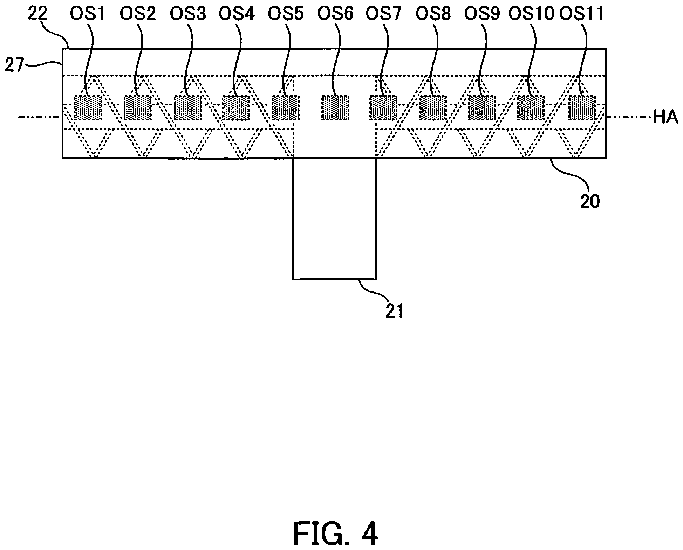

Now, some examples not being part of the invention and embodiments of the present invention are described below. FIG. 4, FIG. 5, FIG. 6, FIG. 7, and FIG. 8 referred to below are schematic views of the case 20 when the case 20 is viewed from the forward direction (F) to the backward direction (B) in FIG. 1, similarly to FIG. 3.

First, the air blowing device 10 includes the single continuous opening OS extending along the helical axis HA of the helical flow paths, as described above (see FIG. 3). However, the air blowing device 10 may also be formed to include a plurality of discontinuous openings OS1 to OS11 arranged along the helical axis of the helical flow paths as illustrated in FIG. 4. With this configuration, a flow velocity and a flow rate of air blown out from each of the openings or the like can be controlled by, for example, adjusting an opening area of each of the openings. As a result, the uniformity of the airflow blown out from the air outlet 22 can be further enhanced.

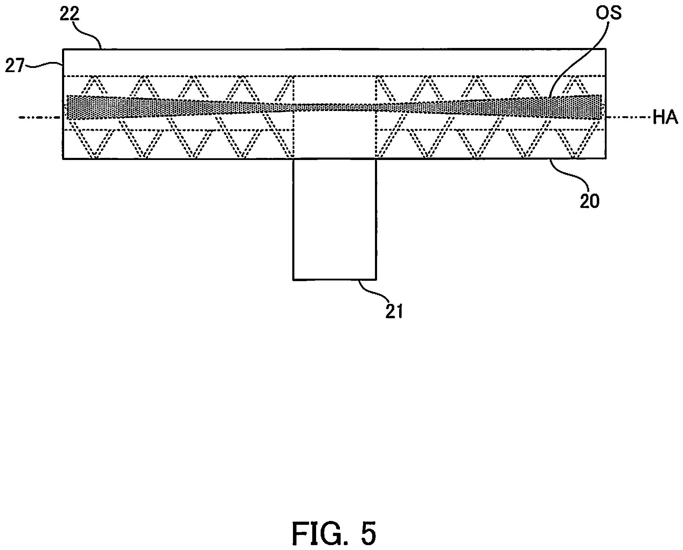

Further, the air blowing device 10 may be configured so that the opening area of the opening OS increases as separating from the air inlet 21 as illustrated in FIG. 5. With this configuration, the flow rate of air blown out from the opening located away from the air inlet 21 can be increased while the flow rate of air blown out from the opening located close to the air inlet 21 is suppressed. As a result, the uniformity of the airflow blown out from the air outlet 22 can be further enhanced.

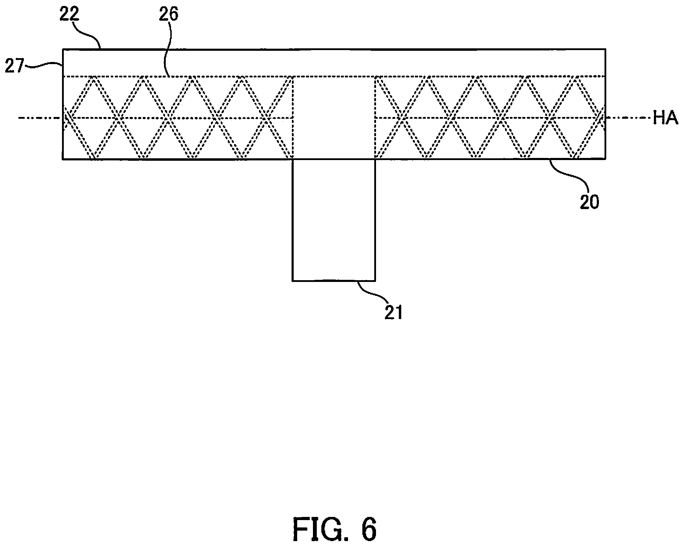

Next, the air blowing device 10 includes the central shaft portion 24 having the columnar shape arranged at the position corresponding to the helical axis HA of the helical flow paths, as described above (for example, see FIG. 1 and FIG. 2). However, the air blowing device of the present invention is not necessarily required to include the central shaft portion 24 (in different words, a diameter of the central shaft portion 24 may be set to zero), and may be configured to define the helical flow paths only by the helical walls 25a and 25b, and the outer wall portion (outer circumferential surface 26a) of the case 20, as illustrated in FIG. 6. With this configuration, the air blowing device can be more simply manufactured, for example, for the elimination of the central shaft portion 24.

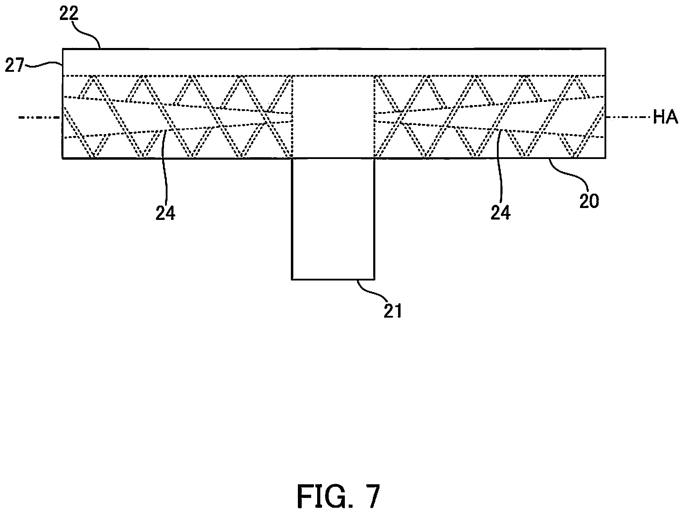

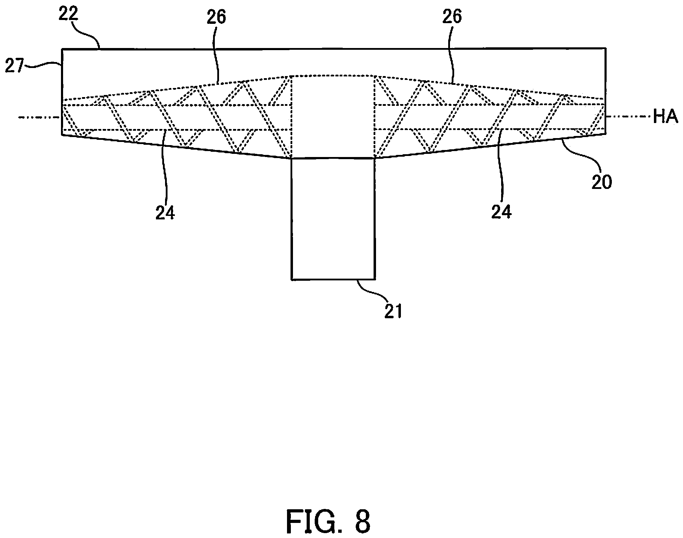

In FIG. 6, the illustration of the opening OS is omitted for convenience of description. The same applies to FIG. 7 and FIG. 8 referred to below.

Further, the radius (diameter) of the central shaft portion 24 of the air blowing device 10 is constant (a fixed value) regardless of the position. However, the air blowing device of the present invention may be formed so that the size of the diameter of the central shaft portion 24 increases as separating from the air inlet 21, as illustrated in FIG. 7. With this configuration, the flow path sectional area of the helical flow paths decreases as separating from the air inlet 21. Therefore, the flow velocity and the flow rate of air blown out from the opening located away from the air inlet can be increased while the flow velocity and the flow rate of air blown out from the opening located close to the air inlet are suppressed. As a result, the uniformity of the airflow blown out from the air outlet 22 can be further enhanced.

Alternatively, the air blowing device of the present invention may be configured so that the radius of the outer circumferential surface 26a of the helical flow paths (length from the helical axis HA to the outer circumferential surface 26a) decreases as separating from the air inlet 21 while the size of the diameter of the central shaft portion 24 is kept constant, as illustrated in FIG. 8. Even with this configuration, similarly to the variation illustrated in FIG. 7, the flow path sectional area of the helical flow paths decreases as separating from the air inlet 21. As a result, the uniformity of the airflow blown out from the air outlet 22 can be further enhanced.

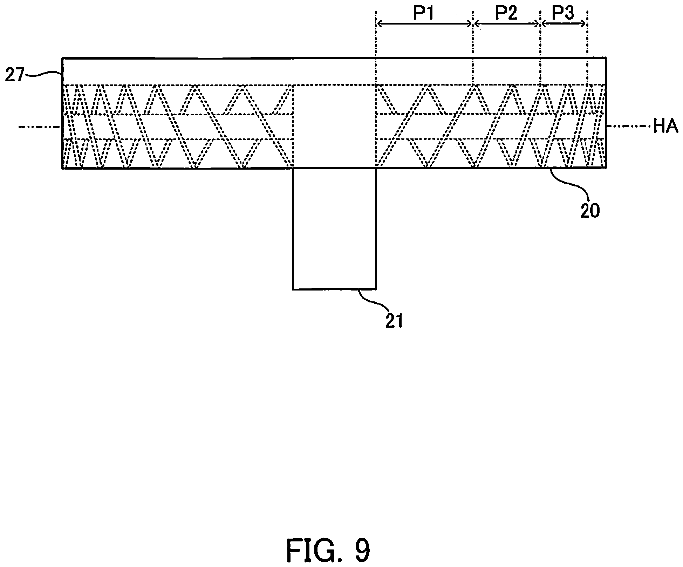

Next, in the air blowing device 10, the unit turn length of the helical flow paths (helical pitch) is constant (a fixed value) regardless of the position. However, the air blowing device 10 may be configured so that, as illustrated in FIG. 9, the unit turn length of the helical flow paths decreases as separating from the air inlet 21 (for example, unit turn lengths P1, P2, and P3 in the drawing satisfy a relationship: P1>P2>P3). With this configuration, the flow velocity and the flow rate of air blown out from the opening located away from the air inlet can be enhanced while the flow velocity and the flow rate of air blown out from the opening located close to the air inlet are suppressed. As a result, the uniformity of the airflow blown out from the air outlet 22 can be further enhanced.

Next, the air blower device 10 is an example where the air blowing device of the present invention is applied to the defroster. However, the air blowing device of the present invention is not necessarily required to be used as the defroster, and may also be used as an air blowing device other than the defroster by adjusting the arrangement of the helical flow paths, the number, arrangement, and shape of openings, a shape of the air outlet, and the like so as to satisfy the functions required as the air blowing device.

### <Overview of Examples and Embodiments>

As described above referring to FIG. 1 to FIG. 9, the air blowing device 10 according to the examples (Fig. 1-6 and Fig.9) and embodiments of the present invention (Figs. 7 and 8) includes the air inlet 21, the airflow path configured to allow the air introduced from the air inlet 21 to flow therethrough, and the air outlet 22 configured to blow out the air flowing in the airflow path.

In the air blowing device 10, the airflow path includes the helical flow paths (airflow paths through which the airflows a1, a2, a3, and a4 flow) that are the helical airflow paths extending in the direction separating from the air inlet 21 (extending in the left direction (L) and the right direction (R) from the central portion of the case 20 in FIG. 1),
the helical flow paths include the opening OS formed in the outer circumferential surface 26a of the helical flow paths,
the opening OS is connected to the air outlet 22 through the discharge path 27 configured to guide the air passing through the opening OS to the air outlet 22, and
the discharge path 27 is formed to extend from the opening OS in the forward direction of the turning direction of the air flowing in the helical flow paths (for example, in the tangential direction TL in FIG. 2).

In the air blowing device 10, the opening OS is formed as the single continuous opening extending along the helical axis HA of the helical flow paths (FIG. 3). However, the opening OS may also be formed as the plurality of discontinuous openings (OS1 to OS11 in FIG. 4) arranged along the helical axis HA of the helical flow paths.

Further, the opening OS may be formed so that the opening area of the opening OS increases as separating from the air inlet 21 (FIG. 5).

The air blowing device 10 includes the central shaft portion 24 at the position corresponding to the helical axis HA of the helical flow paths. However, the air blowing device of the present invention may be configured without the central shaft portion 24 (FIG. 6).

According to the present invention as defined in claim 1, the flow path sectional area of the helical flow paths decreases as separating from the air inlet 21 (FIG. 7 and FIG. 8). As a specific example, the helical flow paths may be formed so that the size of the diameter of the outer circumferential surface 26a of the helical flow paths is the same regardless of the distance from the air inlet 21, the central shaft portion 24 is provided at the position corresponding to the helical axis HA of the helical flow paths, and the size of the diameter of the central shaft portion 24 increases as separating from the air inlet 21 (FIG. 7). As another specific example, the size of the diameter of the outer circumferential surface 26a of the helical flow paths may be formed to decrease as separating from the air inlet 21, whereas the size of the diameter of the central shaft portion 24 may be formed to be constant regardless of the distance from the air inlet 21 (FIG. 8).

Further, the unit turn length of the helical flow paths (length of the helical flow paths in the helical axis direction when each of the helical flow path turns at 360 degrees about the helical axis HA) may be formed to decrease as separating from the air inlet 21 (FIG. 8).

The helical flow paths of the air blowing device 10 are the multi-helical flow paths (double-helical flow paths) formed by combining the plurality of helical airflow paths.

### Industrial Applicability

As described above, the present invention can be applied to an air blowing device capable of being downsized without impairing the functions as the air blowing device.

### Reference Signs List

- 10: air blowing device
- 21: air inlet
- 22: air outlet
- 24: central shaft portion
- 26: outer wall portion
- 26a: outer circumferential surface of helical flow path
- 27: discharge path
- a1, a2, a3, a4: airflow
- OS: opening

## Claims

1. An air blowing device (10), comprising:
an air inlet (21);
an airflow path configured to allow air introduced from the air inlet (21) to flow therethrough; and
an air outlet (22) configured to blow out the air flowing in the airflow path,
wherein the airflow path includes a helical flow path that is a helical airflow path extending as separating from the air inlet (21) and that is formed such that the air introduced from the air inlet (21) into the air blowing device (10) forms a helical swirl flow which flows while turning along a shape of the helical flow path when the air introduced from the air inlet (21) into the air blowing device (10) moves in the helical flow path;
the helical flow path includes an opening (OS) formed in an outer circumferential surface (26a) of the helical flow path;
the opening (OS) is connected to the air outlet (22) through a discharge path (27) configured to guide the air passing through the opening (OS) to the air outlet (22);
the discharge path (27) is formed to extend from the opening (OS) in a forward direction of a turning direction of the air flowing in the helical flow path, and
the opening (OS) and the discharge path (27) are arranged such that all the air introduced from the air inlet (21) into the air blowing device (10) passes through the opening (OS) and the discharge path (27) and is blown out of the air outlet (22) **characterized in that**
a flow path sectional area of the helical flow path decreases as separating from the air inlet (21).

2. An air blowing device (10) according to claim 1, wherein the opening (OS) is a single continuous opening extending along a helical axis (HA) of the helical flow path or a plurality of discontinuous openings arranged along the helical axis (HA) of the helical flow path.

3. An air blowing device (10) according to claim 1 or 2, wherein an opening area of the opening (OS) increases as separating from the air inlet (21).

4. An air blowing device (10) according to any one of claims 1 to 3, wherein: a size of a diameter of the outer circumferential surface (26a) of the helical flow path is the same regardless of a distance from the air inlet (21); and
the air blowing device (10) further comprises a central shaft portion (24) arranged at a position corresponding to the helical axis (HA) of the helical flow path, and a size of a diameter of the central shaft portion (24) increases as separating from the air inlet (21).

5. An air blowing device (10) according to any one of claims 1 to 4, wherein a unit turn length that is a length of the helical flow path in a helical axis direction when the helical flow path turns at 360 degrees about the helical axis (HA) decreases as separating from the air inlet (21).

6. An air blowing device (10) according to any one of claims 1 to 5, wherein the helical flow path comprises a multi-helical flow path formed by combining a plurality of helical airflow paths.

## Patentansprüche

1. Luftblasvorrichtung (10), aufweisend:
einen Lufteinlass (21);
einen Luftströmungspfad, der dazu konfiguriert ist, es von dem Lufteinlass (21) eingeführter Luft zu erlauben, durch ihn hindurch zu strömen; und
einen Luftauslass (22), der dazu konfiguriert ist, die in dem Luftströmungspfad strömende Luft auszublasen,
wobei der Luftströmungspfad einen wendelförmigen Strömungspfad aufweist, der ein wendelförmiger Luftströmungspfad ist, der sich so erstreckt, dass er sich von dem Lufteinlass (21) entfernt, und der so ausgebildet ist, dass die von dem Lufteinlass (21) in die Luftblasvorrichtung (10) eingeführte Luft einen wendelförmigen Wirbelstrom bildet, der strömt, während er sich entlang einer Form des wendelförmigen Strömungspfads dreht, wenn sich die von dem Lufteinlass (21) in die Luftblasvorrichtung (10) eingeführte Luft in dem wendelförmigen Strömungspfad bewegt;
der wendelförmige Strömungspfad eine Öffnung (OS) aufweist, die in einer äußeren Mantelfläche (26a) des wendelförmigen Strömungspfads ausgebildet ist;
die Öffnung (OS) mit dem Luftauslass (22) über einen Auslasspfad (27) verbunden ist, der dazu konfiguriert ist, die durch die Öffnung (OS) gelangende Luft zu dem Luftauslass (22) zu leiten;
der Auslasspfad (27) so ausgebildet ist, dass er sich von der Öffnung (OS) in einer Vorwärtsrichtung einer Drehrichtung der in dem wendelförmigen Strömungspfad strömenden Luft erstreckt, und
die Öffnung (OS) und der Auslasspfad (27) so angeordnet sind, dass die gesamte von dem Lufteinlass (21) in der Luftblasvorrichtung (10) eingeführte Luft durch die Öffnung (OS) und den Auslasspfad (27) gelangt und aus dem Luftauslass (22) ausgeblasen wird,
**dadurch gekennzeichnet, dass**
eine Strömungspfadquerschnittsfläche des wendelförmigen Strömungspfads mit zunehmender Entfernung von dem Lufteinlass (21) abnimmt.

2. Luftblasvorrichtung (10) gemäß Anspruch 1, wobei die Öffnung (OS) eine einzige durchgehende Öffnung ist, die sich entlang einer Wendelachse (HA) des wendelförmigen Strömungspfads erstreckt, oder aus mehreren diskontinuierlichen Öffnungen besteht, die entlang der Wendelachse (HA) des wendelförmigen Strömungspfads angeordnet sind.

3. Luftblasvorrichtung (10) gemäß Anspruch 1 oder 2, wobei eine Öffnungsfläche der Öffnung (OS) mit zunehmender Entfernung von dem Lufteinlass (21) zunimmt.

4. Luftblasvorrichtung (10) gemäß einem der Ansprüche 1 bis 3, wobei eine Größe eines Durchmessers der äußeren Mantelfläche (26a) des wendelförmigen Strömungspfads unabhängig von der Entfernung von dem Lufteinlass (21) gleich ist; und
die Luftblasvorrichtung (10) ferner einen mittigen Schaftteil (24) aufweist, der an einer Position angeordnet ist, die der Wendelachse (HA) des wendelförmigen Strömungspfads entspricht, und eine Größe eines Durchmessers des mittigen Schaftteils (24) mit zunehmender Entfernung von dem Lufteinlass (21) zunimmt.

5. Luftblasvorrichtung (10) gemäß einem der Ansprüche 1 bis 4, wobei eine Einheitswindungslänge, die eine Länge des wendelförmigen Strömungspfads in einer Richtung der Wendelachse ist, wenn sich der wendelförmige Strömungspfad um 360 Grad um die Wendelachse (HA) dreht, mit zunehmender Entfernung von dem Lufteinlass (21) abnimmt.

6. Luftblasvorrichtung (10) gemäß einem der Ansprüche 1 bis 5, wobei der wendelförmige Strömungspfad einen aus mehreren Wendeln bestehenden Strömungspfad aufweist, der durch Kombinieren mehrerer wendelförmiger Strömungspfade ausgebildet wird.

## Revendications

1. Dispositif de soufflage d'air (10),
une entrée d'air (21) ;
un chemin d'écoulement d'air configuré pour permettre à de l'air introduit depuis l'entrée d'air (21) de s'écouler à travers celui-ci ; et
une sortie d'air (22) configurée pour souffler à l'extérieur l'air s'écoulant dans le chemin d'écoulement d'air,
dans lequel le chemin d'écoulement d'air inclut un chemin d'écoulement hélicoïdal qui est un chemin d'écoulement d'air hélicoïdal s'étendant en se séparant de l'entrée d'air (21) et qui est formé de telle sorte que l'air introduit depuis l'entrée d'air (21) dans le dispositif de soufflage d'air (10) forme un écoulement tourbillonnaire hélicoïdal qui s'écoule tout en tournant le long d'une forme du chemin d'écoulement hélicoïdal quand l'air introduit depuis l'entrée d'air (21) dans le dispositif de soufflage d'air (10) se déplace dans le chemin d'écoulement hélicoïdal ;
le chemin d'écoulement hélicoïdal inclut une ouverture (OS) formée dans une surface circonférentielle extérieure (26a) du chemin d'écoulement hélicoïdal ;
l'ouverture (OS) est raccordée à la sortie d'air (22) par l'intermédiaire d'un chemin d'évacuation (27) configuré pour guider l'air passant par l'ouverture (OS) jusqu'à la sortie d'air (22) ;
le chemin d'évacuation (27) est formé pour s'étendre depuis l'ouverture (OS) dans une direction vers l'avant d'une direction de rotation de l'air s'écoulant dans le chemin d'écoulement hélicoïdal, et
l'ouverture (OS) et le chemin d'évacuation (27) sont agencés de telle sortie que tout l'air introduit depuis l'entrée d'air (21) dans le dispositif de soufflage d'air (10) passe à travers l'ouverture (OS) et le chemin d'évacuation (27) et est soufflé à l'extérieur de la sortie d'air (22)
**caractérisé en ce que**
une aire transversale de chemin d'écoulement du chemin d'écoulement hélicoïdal diminue en se séparant de l'entrée d'air (21).

2. Dispositif de soufflage d'air (10) selon la revendication 1, dans lequel l'ouverture (OS) est une unique ouverture continue s'étendant le long d'un axe hélicoïdal (HA) du chemin d'écoulement hélicoïdal ou une pluralité d'ouvertures discontinues agencées le long de l'axe hélicoïdal (HA) du chemin d'écoulement hélicoïdal.

3. Dispositif de soufflage d'air (10) selon la revendication 1 ou 2, dans lequel une aire d'ouverture de l'ouverture (OS) augmente en se séparant de l'entrée d'air (21).

4. Dispositif de soufflage d'air (10) selon l'une quelconque des revendications 1 à 3, dans lequel : une taille d'un diamètre de la surface circonférentielle extérieure (26a) du chemin d'écoulement hélicoïdal est la même quelle que soit une distance depuis l'entrée d'air (21) ; et
le dispositif de soufflage d'air (10) comprend en outre une portion d'arbre central (24) agencée à une position correspondant à l'axe hélicoïdal (HA) du chemin d'écoulement hélicoïdal, et une taille d'un diamètre de la portion d'arbre central (24) augmente en se séparant de l'entrée d'air (21).

5. Dispositif de soufflage d'air (10) selon l'une quelconque des revendications 1 à 4, dans lequel une longueur de rotation unitaire qui est une longueur du chemin d'écoulement hélicoïdal dans une direction d'axe hélicoïdal quand le chemin d'écoulement hélicoïdal tourne de 360 degrés autour de l'axe hélicoïdal (HA) diminue en se séparant de l'entrée d'air (21).

6. Dispositif de soufflage d'air (10) selon l'une quelconque des revendications 1 à 5, dans lequel le chemin d'écoulement hélicoïdal comprend un chemin d'écoulement multi-hélicoïdal formé en combinant une pluralité de chemins d'écoulement d'air hélicoïdaux.
